# FASCICULE DE BREVET EUROPEEN

(11) **EP 4 179 444 B1**
(45) Date de publication et mention de la délivrance du brevet: **21.01.2026**
(21) Numéro de dépôt: 21746775.2
(22) Date de dépôt: 08.07.2021
(51) Int. Cl.: G06F 21/62, H04W 12/02, G06F 17/18

(54) **PROCÉDÉ ET SYSTÈME D'ANONYMISATION DE SÉRIES TEMPORELLES**
VERFAHREN UND SYSTEM ZUR ANONYMISIERUNG VON ZEITREIHEN
METHOD AND SYSTEM FOR ANONYMISATION OF TIME SERIES

(30) Priorité: 08.07.2020 FR 2007245
(43) Date de publication de la demande: 17.05.2023
(73) Titulaire: BIG DATA SANTE, 44100 Nantes (FR)
(72) Inventeur: DELVAUX, Louis, 71270 Pierre de Bresse (FR); BREILLACQ, Olivier, 44100 Nantes (FR)
(74) Mandataire: Yes My Patent
(86) Numéro de dépôt international: PCT/FR2021/051260
(87) Numéro de publication internationale: WO 2022/008845

(56) Documents cités:
- US-A1- 2010 064 373
- VIBHOR RASTOGI ET AL: "Differentially private aggregation of distributed time-series with transformation and encryption", PROCEEDINGS OF THE 2010 INTERNATIONAL CONFERENCE ON MANAGEMENT OF DATA, SIGMOD '10, ACM PRESS, NEW YORK, NEW YORK, USA, 6 June 2010 (2010-06-06) - 6 June 2010 (2010-06-06), pages 735 - 746, XP058087510, ISBN: 978-1-4503-0032-2, DOI: 10.1145/1807167.1807247
- RAHMAN SHAH ATIQUR ET AL: "Combining Fourier and laggedk-nearest neighbor imputation for biomedical time series data", JOURNAL OF BIOMEDICAL INFORMATICS, ACADEMIC PRESS, NEW YORK, NY, US, vol. 58, 21 October 2015 (2015-10-21), pages 198 - 207, XP029340747, ISSN: 1532-0464, DOI: 10.1016/J.JBI.2015.10.004

## Description

L'invention qui est définie par les revendications indépendantes concerne de manière générale l'anonymisation de données sensibles destinées à être partagées avec des tiers, par exemple, à des fins de recherche, d'analyse ou d'exploitation de celles-ci. Plus particulièrement, l'invention se rapporte à un procédé et un système d'anonymisation de données sensibles sous la forme de séries temporelles.

De manière générale, l'utilisation, le stockage et le partage des données à caractère personnel, dites « données personnelles », sont encadrés par des réglementations visant à protéger la vie privée et l'identité des personnes, telles que le règlement européen RGPD, pour « Règlement Général sur la Protection des Données », et la loi française connue sous le nom « loi informatique et libertés ». Certaines données, comme celles relatives à l'état de santé, à la vie privée et familiale, au patrimoine et autres, sont particulièrement sensibles et doivent faire l'objet de précautions particulières.

Le partage de certaines données porteuses d'information, par exemple sous la forme de données ouvertes dites « open data » en anglais, offre de nombreuses opportunités, non seulement pour l'extension des connaissances et du savoir humain, mais aussi pour créer de nouveaux produits et services de qualité.

Des techniques d'anonymisation sont utilisées pour traiter des données destinées à être partagées avec des tiers de façon licite, par exemple, à travers une mise en ligne de celles-ci. Le traitement effectué vise à rendre impossible l'identification des personnes auxquelles les données sont liées. Une fois les données anonymisées, celles-ci ne doivent plus pouvoir être reliées à une personne et cela de manière définitive. Un processus d'anonymisation doit être pensé en tenant compte des utilisations envisagées de ces données.

Les séries temporelles font partie d'une catégorie importante de données et présentent un intérêt particulier, notamment dans le domaine de la santé, pour la recherche médicale et pharmaceutique. Ces données, sous forme d'enregistrements chronologiques, définissent généralement l'évolution de variables d'intérêt dans le temps. Ainsi, dans le domaine de la santé, ces variables d'intérêt sont, par exemple, des grandeurs physiologiques comme la tension artérielle, la pulsation cardiaque et autres, relevées lors de séjours à l'hôpital. Les données de séries temporelles comprennent aussi notamment des flux de données générés et transmis par des dispositifs connectés, tels que montres connectées et autres, en technologie dite « mettable » ou « wearable » en anglais.

Les principales méthodes d'anonymisation connues procèdent par suppression, généralisation ou remplacement des informations personnelles dans les enregistrements individuels.

La méthode dite « k-anonymisation » est l'une des plus utilisées. Cette méthode cherche à rendre indiscernable chaque enregistrement d'un ensemble de données d'au moins k-1 autres enregistrements de cet ensemble de données. La méthode dite « L-diversité » est une extension de la méthode de « k-anonymisation » qui autorise une meilleure protection des données en impliquant dans chaque groupe de k enregistrements, dit « k-groupe », la présence d'au moins L valeurs d'attributs sensibles. La spécificité des séries temporelles rend difficile, voire impossible, la distinction entre les attributs quasi-identifiants et sensibles de ces données. Les méthodes de « k-anonymisation » et de « L-diversité » ne sont donc pas directement applicables aux séries temporelles. De plus, les modèles basés sur la méthode de « k-anonymisation » ne permettent pas de conserver des caractéristiques des séries temporelles qui contiennent une grande partie des informations.

Dans l'article « Supporting pattern-preserving anonymization for time-series data », IEEE Transactions on Knowledge and Data Engineering, 2011, 25(4), pages 877-892, Shou et al. propose un modèle dit de « (k ; P)-anonymisation » pour préserver l'anonymat des séries temporelles. Cette méthode répond aux requêtes de plages de valeurs et de correspondance de formes dans les bases de données de séries temporelles tout en empêchant les attaques de couplage sur les données publiées. La « k-anonymisation » est ici étendu à un second niveau appelé « P-anonymisation ». Dans chaque groupe formé par au moins k séries temporelles ayant la même enveloppe, au moins P-1 autres enregistrements avec la même forme sont nécessaires pour assurer la (k ; P)-anonymisation. Cependant, compte-tenu que cette méthode utilise la « k-anonymisation », elle introduit une généralisation des données pour satisfaire les requêtes, ce qui induit une perte d'information. De plus, l'utilisateur ne peut effectuer des requêtes que sur une base de données qu'il ne contrôle pas, et pour obtenir de nouvelles informations, il doit effectuer une nouvelle requête.

Dans l'article « Pattern-sensitive time-series anonymization and its application to energy-consumption data », Open Journal of Information Systems (OJIS), 2014, 1(1), pages 3-22, Kessler et al. propose une nouvelle approche dite (n; l; k)-anonymisation, qui permet l'anonymisation des séries temporelles, en supposant qu'un attaquant ait accès à des informations externes sur les données. Etant donné la quantité de connaissances, cette méthode permet de spécifier une limite supérieure des informations exposées, en plus du degré d'anonymat. Cette méthode est appliquée aux données de consommation d'énergie et implique une modification des données originales pour respecter l'anonymat défini.

Papadimitriou et al. et Singh et Sayal, dans leurs l'articles respectifs «Time series compressibility and privacy », Proceedings of the 33rd International Conference on Very Large Data Bases, 2007, page 459-470, et « Privacy preserving burst detection of distributed time series data using linear transforms », IEEE Symposium on Computational Intelligence and Data Mining, 2007, pages 646-653, décrivent des méthodes basées sur la perturbation. Ces méthodes introduisent du bruit sur les transformées de Fourier ou les transformées en ondelettes, afin de préserver les structures originales des séries temporelles tout en réduisant le risque d'atteinte à la vie privée.

Une autre méthode d'anonymisation consiste à générer des données synthétiques qui conservent les mêmes informations utiles que les enregistrements originaux. Ces dernières années, les réseaux antagonistes génératifs dits « GAN » (de « Generative Adversarial Networks » en anglais) ont démontré leur efficacité pour apprendre la distribution des données et générer des données synthétiques cohérentes.

Cependant, leur possible exploitation pour l'anonymisation des séries temporelles n'est pas suffisamment vérifiée à ce jour.

Ainsi, dans l'article « Real-valued (medical) time series generation with recurrent conditional gans », 2017, arXiv preprint arXiv:1706.02633, Esteban et al. présente un réseau « GAN » récurrent pour la génération de séries temporelles multidimensionnelles à valeur réelle, en mettant en évidence leur application au domaine médical. La sensibilité des données médicales est soulignée dans cet article et il est proposé un entraînement basé sur la confidentialité différentielle (« differential privacy » en anglais) pour obtenir des garanties plus strictes en la matière. Dans l'article « Generative adversarial networks for electronic health records: a framework for exploring and evaluating methods for predicting drug-induced laboratory test trajectories », 2017, arXiv preprint arXiv:1712.00164, Yahi et al. met également en évidence l'utilisation des réseaux « GAN » dans le domaine médical pour générer des séries temporelles continues de laboratoire. Dans l'article « Time-series generative adversarial networks », 2019, Advances in Neural Information Processing Systems, pages 5509-5519, Yoon et al. présente un nouveau modèle de génération de séries temporelles dit « TimeGAN » qui combine la polyvalence de l'approche non supervisée du réseau « GAN » avec le contrôle de la dynamique temporelle conditionnelle offert par les modèles autorégressifs supervisés.

D'autres méthodes sont connues et autorisent une génération de séries temporelles synthétiques, mais celles-ci ne tiennent pas compte des préoccupations en matière de protection de la vie privée.

Ainsi, dans l'article « Generating synthetic time series to augment sparse datasets », IEEE international conference on data mining (ICDM), 2017, pages 865-870, Forestier et al. présente une technique d'augmentation des données à des fins de classification de séries temporelles. Des séries temporelles synthétiques sont produites en effectuant une moyenne pondérée des séries temporelles par la méthode de déformation dynamique du temps dite « DTW » (de « Dynamic Time Warping » en anglais).

Par le document US20150007341A1, il est connu un serveur d'anonymisation de données mis en œuvre dans un réseau de téléphonie cellulaire dans le cadre de la fourniture de services basés sur la localisation. Les données de localisation d'un même abonné, sous la forme d'une séquence de séries temporelles d'« empreintes » de l'abonné sur des nœuds de raccordement du réseau, sont anonymisées. L'utilisation d'une méthode des « k plus proches voisins » dite « k-NN » (de « k-nearest neighbors » en anglais) est ici divulguée pour déterminer les nœuds de raccordement les plus proches d'un nœud de raccordement d'intérêt.

Le document CA2980618A1 décrit, dans le contexte médical, un système de collecte et de transmission de flux de données temps réel vers un centre de traitement et d'analyse des données. Les données comportent des séries temporelles. Avant la transmission vers le centre de traitement, les données sont synchronisées, compressées, cryptées et peuvent être anonymisées. L'anonymisation vise des données sensibles telles que l'identité des professionnels et des patients et autres. Ce document ne détaille pas la méthode d'anonymisation utilisée pour traiter les données.

VIBHOR RASTOGI ET AL: "Differentially private aggregation of distributed time-series with transformation and encryption",PROCEEDINGS OF THE 2010 INTERNATIONAL CONFERENCE ON MANAGEMENT OF DATA, SIGMOD '10, ACM PRESS, NEW YORK, NEW YORK, USA, 6 juin 2010 (2010-06-06), - 6 juin 2010 (2010-06-06), pages 735-746, XP058087510,DOI: 10.1145/1807167.1807247ISBN: 978-1-4503-0032-2 divulgue une anonymisation différentielle des données de santé ou de localisation, obtenue en ajoutant une perturbation aux transformations de Fourier de ces données. Un bruit de Laplace est également ajouté aux données résultantes. Les requêtes adressées à la base de données sont ainsi traitées en préservant un k-anonymity. La distance de Manhattan est utilisée pour mesurer la similarité (ou la différence) entre les points de données.US 2010/064373 A1 (CAI YING [US] ET AL) 11 mars 2010 (2010-03-11) divulgue le masquage de trajectoire GPS. Le niveau d'anonymat associé au nœud mobile donne la taille de région contenant l'emplacement du nœud mobile. La région est utilisée pour les services dépendant de la localisation et préservent ainsi l'anonymat du nœud mobile.Le niveau d'anonymat est spécifié en laissant l'utilisateur sélectionner la région pour la confidentialité souhaitée. RAHMAN SHAH ATIQUR ET AL: "Combining Fourier and laggedk-nearest neighbor imputation for biomedical time series data",JOURNAL OF BIOMEDICAL INFORMATICS, ACADEMIC PRESS, NEW YORK, NY, US, vol. 58, 21 octobre 2015 (2015-10-21), pages 198-207, XP029340747,ISSN: 1532-0464, DOI: 10.1016/J.JBI.2015.10.004 divulgue une interpolation de valeurs de diabète lorsque ces valeurs sont manquantes, en utilisant une transformation de Fourier et un réseau de neurones kNN. Une corrélation des séries temporelles sur des versions décalées d'autres séries utilise le lagged k-NN (Lk-NN), qui a deux paramètres : k, le nombre de plus proches voisins, et p, le nombre de décalages temporels. Les données manquantes sont distinguées entre MAR (manquantes de manière aléatoire) et NMAR (non manquantes de manière aléatoire). Les p décalages avec la corrélation la plus forte pour chaque paire de variables, puis les k plus proches voisins à travers tous les décalages (pondérés par la force de la corrélation) sont considérés pour la moyenne des résultats.La transformée de Fourier de la série temporelle, jusqu'au point manquant, est utilisé pour interpoler le point manquant.

De manière générale, les différentes méthodes connues d'anonymisation de séries temporelles ou de génération de séries temporelles synthétiques, notamment celles commentées plus haut, traitent de séries temporelles comportant un même nombre de mesures prises à un même moment régulier. Les méthodes connues ne tiennent pas compte de différences possibles entre des caractéristiques temporelles des enregistrements chronologiques, telles que le pas des temps de mesure, le pas de la première mesure, l'existence d'un décalage temporel, ou phase, et le nombre de mesures. L'entité inventive souligne l'importance pour l'anonymisation de prendre en compte les différences susmentionnées dans les caractéristiques temporelles. En effet, contrairement à des données tabulaires, les caractéristiques temporelles peuvent être des données identifiantes en elles-mêmes. Par exemple, dans le cas d'un enregistrement chronologique fait lors d'un séjour à l'hôpital, celui-ci peut fournir des informations sur l'heure d'arrivée ou de départ d'une personne à l'hôpital ou sur la durée totale de son séjour. Les valeurs prises par la variable d'intérêt dans l'enregistrement chronologique, ainsi que la fluctuation de ces valeurs, peuvent également être identifiantes.

La présente invention a pour objectif de procurer un procédé et un système d'anonymisation de séries temporelles ne présentant pas les inconvénients susmentionnés de la technique antérieure. L'invention autorise une prise en compte des caractéristiques temporelles particulières qui peuvent être présentes dans les ensembles de données de séries temporelles et permet ainsi une anonymisation plus performante et complète que celles apportées par les solutions connues de la technique antérieure.

Selon un premier aspect, l'invention concerne un procédé d'anonymisation de données sensibles sous la forme d'un ensemble de séries temporelles représentant chacune une évolution dans le temps d'une même variable, le procédé délivrant un ensemble de séries temporelles synthétiques, dites « avatars », en tant que version anonymisée de l'ensemble de séries temporelles, le procédé comprenant une identification, pour chaque série temporelle considérée, d'un nombre prédéterminé K de plus proches séries temporelles voisines dans l'ensemble de séries temporelles à l'aide d'une loi de calcul de distance prédéterminée fournissant des distances dans le domaine fréquentiel entre la série temporelle considérée et d'autres séries temporelles de l'ensemble de séries temporelles, et une génération, pour chaque série temporelle considérée, d'une première version de série temporelle synthétique à partir d'une combinaison dans le domaine fréquentiel des K plus proches séries temporelles voisines identifiées.

Conformément à l'invention, le procédé comprend un processus d'anonymisation supplémentaire appliqué à l'ensemble généré de premières versions de séries temporelles synthétiques et délivrant l'ensemble de séries temporelles synthétiques, ce processus d'anonymisation supplémentaire visant des caractéristiques temporelles de phase, de nombre de mesures et/ou de pas de mesure des premières versions de séries temporelles synthétiques, et réalisant sur une première version de série temporelle synthétique considérée une modification d'au moins une caractéristique temporelle à partir d'au moins une caractéristique temporelle de même type d'une des K plus proches séries temporelles voisines identifiées qui est sélectionnée à l'aide d'une loi de sélection prédéterminée.

Le procédé de l'invention permet de traiter tout type de série temporelle, en prenant en compte des différences possibles entre les séries temporelles, à savoir, le pas de temps, le nombre de mesures et/ou l'existence d'une phase. Le procédé de l'invention est conçu pour une anonymisation des séries temporelles univariées, c'est-à-dire, avec une seule variable variant dans le temps, et des séries temporelles multivariées, c'est-à-dire, avec plusieurs variables variant dans le temps.

Selon une caractéristique particulière, le procédé comprend un traitement préalable de l'ensemble de séries temporelles assurant une uniformisation de la caractéristique temporelle de pas de mesure avant l'identification des K plus proches séries temporelles voisines, cette uniformisation faisant appel à une interpolation d'au moins une série temporelle avec un pas de lecture déterminé.

Selon une autre caractéristique particulière, la loi de calcul de distance prédéterminée fait appel à un calcul de distance entre composantes fréquentielles des séries temporelles, ce calcul de distance correspondant à un calcul de distance euclidienne dans le domaine temporel, et/ou fait appel à un calcul de distance basé sur les cepstres des séries temporelles.

Selon encore une autre caractéristique particulière, dans la génération des premières versions de séries temporelles synthétiques, la combinaison des K plus proches séries temporelles voisines identifiées fait appel à une somme pondérée de celles-ci dans le domaine fréquentiel comprenant des coefficients de poids aléatoire attribués respectivement aux K plus proches séries temporelles voisines identifiées.

Selon encore une autre caractéristique particulière, les coefficients de poids aléatoire sont calculés à partir des distances, d'un poids aléatoire et d'une contribution déduite à partir d'un vecteur mélangé aléatoirement.

Selon encore une autre caractéristique particulière, la loi de sélection prédéterminée prend en compte les distances et un poids aléatoire.

Selon un autre aspect, l'invention concerne aussi un système d'anonymisation de données sensibles sous la forme d'un ensemble de séries temporelles représentant chacune une évolution dans le temps d'une même variable, le système délivrant un ensemble de séries temporelles synthétiques, dites « avatars », en tant que version anonymisée de l'ensemble de séries temporelles, le système comprenant un module d'identification identifiant, pour chaque série temporelle considérée, un nombre prédéterminé K de plus proches séries temporelles voisines dans l'ensemble de séries temporelles à l'aide d'une loi de calcul de distance prédéterminée fournissant des distances dans le domaine fréquentiel entre la série temporelle considérée et d'autres séries temporelles de l'ensemble de séries temporelles, et un module de génération générant, pour chaque série temporelle considérée, une première version de série temporelle synthétique à partir d'une combinaison dans le domaine fréquentiel des K plus proches séries temporelles voisines identifiées.

Conformément à l'invention, le système comprend un module de traitement d'anonymisation supplémentaire traitant l'ensemble généré de premières versions de séries temporelles synthétiques et délivrant l'ensemble de séries temporelles synthétiques, ledit module de traitement d'anonymisation supplémentaire traitant des caractéristiques temporelles de phase, de nombre de mesures et/ou de pas de mesure des premières versions de séries temporelles synthétiques, et le module de traitement d'anonymisation supplémentaire réalisant sur une première version de série temporelle synthétique considérée une modification d'au moins une caractéristique temporelle à partir d'au moins une caractéristique temporelle de même type d'une des K plus proches séries temporelles voisines identifiées qui est sélectionnée à l'aide d'une loi de sélection prédéterminée.

L'invention concerne aussi un système informatique comportant un dispositif de stockage de données qui stocke des instructions de programme pour la mise en œuvre du procédé tel que décrit brièvement ci-dessus.

L'invention concerne aussi un système d'anonymisation et de partage de séries temporelles comprenant au moins un système informatique comme susmentionné et un serveur informatique distant reliés à travers un réseau de communication de données, le serveur informatique distant hébergeant des fonctions de téléversement et stockage de séries temporelles anonymisées fournies par au moins un système informatique et des fonctions de gestion de destinataires et de partage des séries temporelles anonymisées.

L'invention concerne aussi un produit programme d'ordinateur comportant un support dans lequel sont enregistrées des instructions de programme lisibles par un processeur pour la mise en œuvre du procédé tel que décrit brièvement ci-dessus.

D'autres avantages et caractéristiques de la présente invention apparaîtront plus clairement à la lecture de la description ci-dessous de plusieurs formes de réalisation particulières en référence aux dessins annexés, dans lesquels :
[Fig.1] La Fig.1 une architecture générale simplifiée d'une forme de réalisation particulière d'un système d'anonymisation et de partage de séries temporelles dans lequel est mis en œuvre le procédé d'anonymisation de séries temporelles selon l'invention.
[Fig.2] La Fig.2 représente sous forme de courbes un exemple d'un ensemble de d'enregistrements chronologiques de la tension systolique, en tant que séries temporelles à anonymiser.
[Fig.3] La Fig.3 représente la courbe d'un enregistrement chronologique considéré à anonymiser de l'ensemble d'enregistrements chronologiques de la Fig.2.
[Fig.4] La Fig.4 représente K plus proches enregistrements chronologiques de l'enregistrement chronologique considéré montré à la Fig.3.
[Fig.5] La Fig.5 représente l'enregistrement chronologique considéré de la Fig.3 et un avatar synthétique correspondant qui est généré à partir des K plus proches enregistrements chronologiques montrés à la Fig.4.
[Fig.6] La Fig.6 représente l'ensemble de d'enregistrements chronologiques de la tension systolique de la Fig.2 et un ensemble d'avatar synthétiques correspondants obtenus par la mise en œuvre du procédé d'anonymisation de séries temporelles selon l'invention.
[Fig.7] La Fig.7 montre sous forme de logigramme le processus de traitement d'anonymisation mis en œuvre dans un mode de réalisation particulier du procédé d'anonymisation de séries temporelles selon l'invention.

Dans la description qui suit, à des fins d'explication et non de limitation, des détails spécifiques sont fournis afin de permettre une compréhension de la technologie décrite. Il sera évident pour l'homme du métier que d'autres modes ou formes de réalisation peuvent être mis en pratique en dehors des détails spécifiques décrits ci-dessous. Dans d'autres cas, les descriptions détaillées de méthodes, dispositifs, techniques, etc., bien connus sont omises afin de ne pas complexifier la description avec des détails inutiles. De manière générale, le terme « aléatoire » utilisé dans la présente description de l'invention et les revendications annexées doit aussi être compris comme « pseudo-aléatoire », « quasi-aléatoire » et autres, et se réfère à différentes méthodes connues de génération de variables dites « aléatoires ».

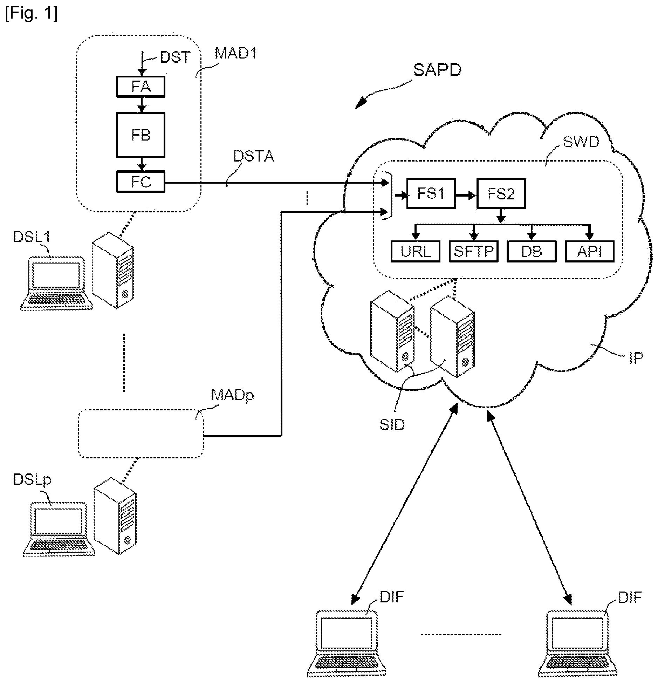

En référence à la Fig.1, il est maintenant décrit ci-dessous un exemple d'architecture générale d'une forme de réalisation particulière SAPD d'un système d'anonymisation et de partage de séries temporelles selon l'invention.

Comme visible à la Fig.1, le système SAPD selon l'invention est déployé via un réseau étendu de communication de données IP, tel que le réseau Internet, et comprend ici essentiellement un ou plusieurs systèmes informatiques locaux, DSL1 à DSLp, et au moins un serveur informatique distant SID en communication de données à travers le réseau IP avec les systèmes informatiques locaux DSL1 à DSLp.

Le procédé d'anonymisation de séries temporelles selon l'invention est mis en œuvre dans chacun des systèmes informatiques locaux DSL1 à DSLp. Ainsi, par exemple, les systèmes informatiques locaux DSL1 à DSLp sont localisés dans des sites différents, tels que des centres hospitaliers, qui collectent un grand nombre de séries temporelles DST relatives à des personnes suivies sur ces sites.

Des modules logiciels d'anonymisation MAD1 à MADp, hébergés respectivement dans des dispositifs de stockage de données, tels que mémoire et/ou disque dur, du systèmes informatiques locaux DSL1 à DSLp, assurent le traitement d'anonymisation des séries temporelles DST. Dans chacun des systèmes informatiques locaux DSL1 à DSLp, la mise en œuvre du procédé d'anonymisation de séries temporelles selon l'invention est assurée par l'exécution d'instructions de code du module logiciel d'anonymisation par un processeur (non représenté) du système informatique local.

Comme montré à la Fig.1 pour le module logiciel d'anonymisation MAD1, chacun des modules logiciels d'anonymisation MAD1 à MADp réalise une pluralité de fonctions correspondant respectivement à des étapes du procédé d'anonymisation de séries temporelles selon l'invention. Ces fonctions et les étapes correspondantes sont décrites en détail plus bas. Brièvement, un premier bloc fonctionnel FA assure la réception des séries temporelles DST collectées. Un autre bloc fonctionnel FB assure le traitement d'anonymisation des données DST et fournit des séries temporelles anonymisées DSTA destinées à être partagées. Un bloc fonctionnel FC assure un stockage des données anonymisées DSTA dans une base de données locale (non représentée) et leur transmission au serveur informatique distant SID, via le réseau de communication de données IP.

Le serveur informatique distant SID est, par exemple, formé d'un ou plusieurs serveurs d'un fournisseur de services d'informatique en nuage. Le serveur informatique distant SID assure ici des fonctions de stockage et de diffusion des séries temporelles anonymisées DSTA. Les séries temporelles anonymisées DSTA sont ainsi rendues accessibles à une pluralité de destinataires. Ces destinataires accèdent aux séries temporelles anonymisées DSTA au moyen de dispositifs informatiques DIF reliés au réseau IP.

Le serveur informatique distant SID héberge un système logiciel SWD chargé du stockage et de la diffusion des séries temporelles anonymisées DSTA. Comme illustré la Fig.1, le système logiciel SWD assure typiquement une fonction FS1 de téléversement et stockage des séries temporelles anonymisées DSTA dans le serveur informatique distant SID et une fonction FS2 de gestion des destinataires des séries temporelles anonymisées DSTA. Ainsi, les séries temporelles anonymisées DSTA peuvent être rendues disponibles par différents moyens, tels que par le téléchargement de fichier, par exemple, au format connu CSV, XML ou XLS, directement à partir d'un lien unique personnalisé sous la forme d'une adresse URL, la navigation et le téléchargement de fichier à travers un protocole sécurisé, par exemple le protocole SFTP, une requête sécurisée sur une base de données BD, ou une interface de programmation API autorisant une interface directe d'une application logicielle du destinataire avec les données DSTA. Les destinataires peuvent être avertis de la mise à disposition des données DSTA par un système hybride d'authentification comportant au moins deux étapes, reposant notamment sur la génération et la transmission d'un lien unique de téléchargement, par exemple par courriel, puis la communication d'une clé à durée de vie limitée, par exemple par SMS.

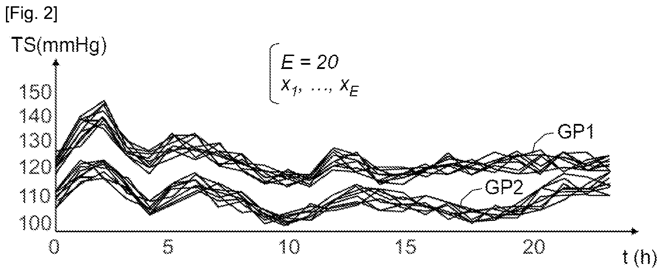

Le procédé d'anonymisation de séries temporelles selon l'invention est maintenant décrit ci-dessous en référence aux Figs.2 à 7. De manière générale, le procédé d'anonymisation de séries temporelles de l'invention est basé sur une modélisation locale et comporte notamment une identification des K séries temporelles les plus similaires, une construction de modèles locaux et une génération aléatoire de séries temporelles de synthèse, désignées « avatars », correspondant aux séries temporelles à anonymiser.

Les Figs.2 à 6 illustrent un exemple d'anonymisation d'un ensemble de séries temporelles, x₁ à x_{E}, formé ici de E=20 enregistrements chronologiques.

En référence à la Fig.2, les E=20 enregistrements chronologiques x₁ à x_{E}, montrés à la Fig.2 sous forme de courbes, sont des enregistrements de la tension artérielle systolique TS de deux groupes de patients GP1 et GP2.

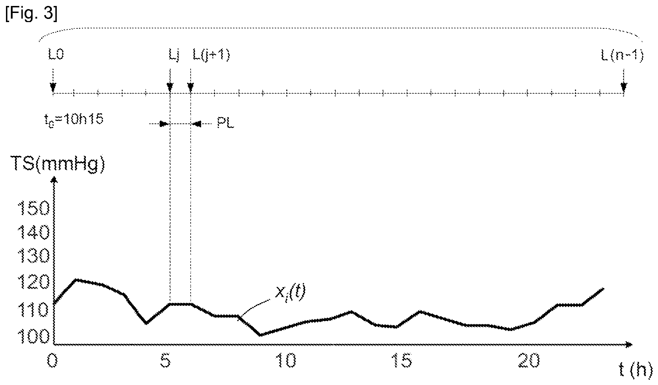

La Fig.3 montre un enregistrement quelconque, désigné xᵢ, faisant partie de l'ensemble des enregistrements chronologiques x₁ à x_{E}. L'évolution de la tension systolique TS, en millimètres de mercure (mmHg), est représentée en fonction du temps t, en heures (h). Comme visible à la Fig.3, l'enregistrement chronologique xᵢ comporte n mesures L0 à L(n-1) de la tension artérielle systolique qui sont faites de manière régulière, avec un pas de temps régulier PL entre deux mesures successives, Lj et L(j+1). La première mesure, L0, est dans cet exemple effectuée à un temps horaire t₀, qui est ici 10h15. Dans les cas habituels, les différents enregistrements chronologiques d'un ensemble de données à anonymiser ont le même pas de temps PL. Cependant, dans d'autres cas, le pas de temps PL n'est pas régulièrement espacé ou diffère d'un enregistrement à un autre. Les temps horaires t₀ du début des enregistrements chronologiques et les nombres de mesures n diffèrent habituellement et dépendent des dates et durées de séjour des patients à l'hôpital.

Comme cela apparaîtra plus clairement par la suite, le procédé d'anonymisation de séries temporelles selon l'invention est conçu pour tenir compte des différents cas qui peuvent se présenter, et autorise ainsi l'anonymisation de tous types de séries temporelles.

Les caractéristiques temporelles mentionnées ci-dessus, à savoir, le pas de temps, le nombre de mesures et le temps de première mesure, ne sont pas traitées dans cet exemple, les E=20 enregistrements chronologiques ayant ici les mêmes caractéristiques temporelles.

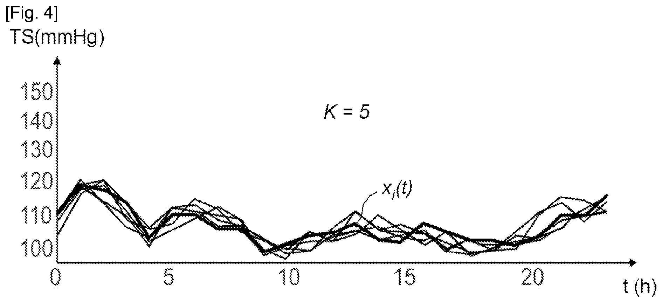

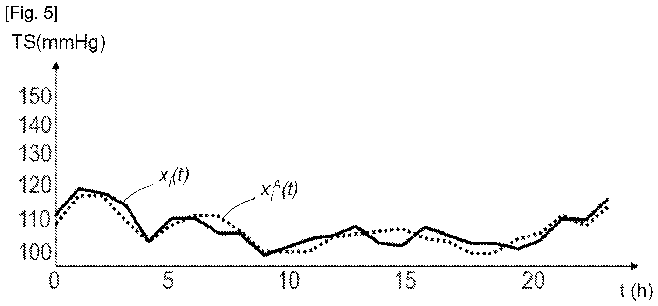

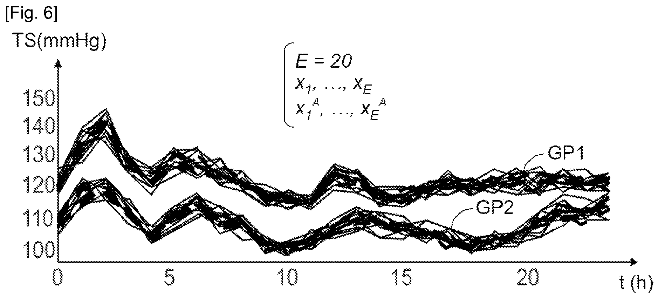

La Fig.4 montre K = 5 plus proches enregistrements voisins de l'enregistrement considéré xᵢ qui ont été identifiés dans l'ensemble des enregistrements chronologiques x₁ à x_{E}. La Fig.5 montre un avatar xᵢ^{A} calculé pour l'enregistrement considéré xᵢ, en se basant sur les transformées des K = 5 plus proches enregistrements voisins de l'enregistrement considéré xᵢ. Le processus d'identification des K = 5 plus proches enregistrements voisins et de calcul de l'avatar est répété pour chacun des enregistrements chronologiques x₁ à x_{E} et permet d'obtenir un ensemble de E=20 avatars. La Fig.6 montre les E=20 enregistrements chronologiques x₁ à x_{E} des groupes de patients GP1 et GP2 et les avatars x₁^{A} à x_{E}^{A} obtenus par la mise en œuvre du procédé selon l'invention.

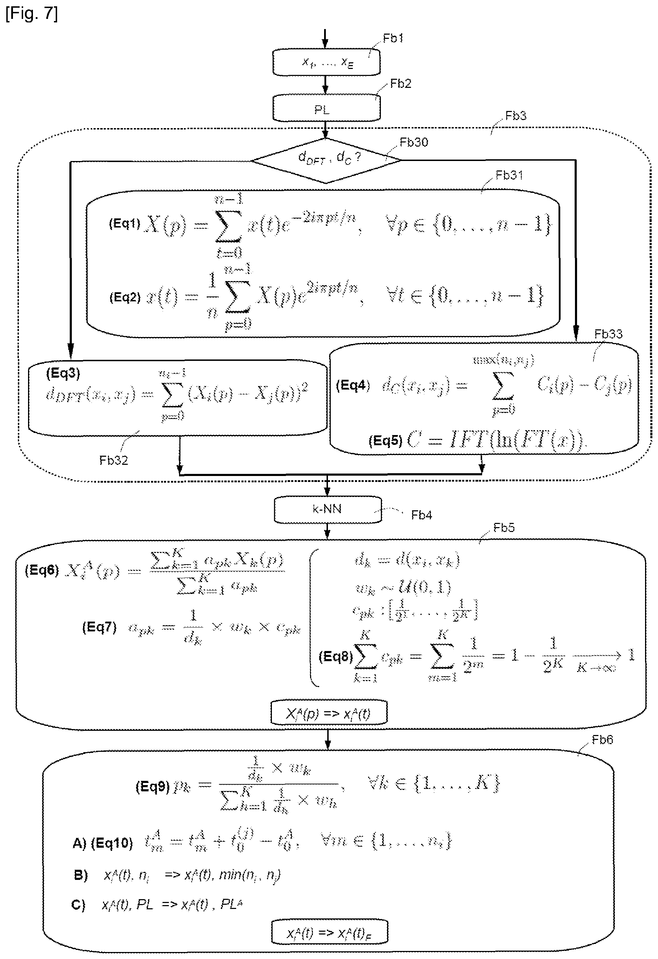

Le processus de traitement d'anonymisation effectué conformément au procédé selon l'invention est maintenant décrit en détail ci-dessous en référence plus particulièrement à la Fig.7. Différentes fonctions, repérées Fb1 à Fb6 à la Fig.7, sont exécutées par le processus de traitement d'anonymisation pour la mise en œuvre du procédé selon l'invention. Ces différentes fonctions Fb1 à Fb6 sont comprises dans le bloc fonctionnel FB susmentionné, en référence à la Fig.1.

La fonction Fb1 réalise un regroupement de E séries temporelles pour former un ensemble de séries temporelles x₁ à x_{E}, en vue du traitement d'anonymisation de celles-ci. Dans ce mode de réalisation particulier du procédé selon l'invention, des séries temporelles univariées de même nature, c'est-à-dire, concernant une seule même variable, comme la tension systolique dans l'exemple des Figs.2 à 6, sont regroupées pour former l'ensemble de séries temporelles x₁ à x_{E} à anonymiser.

La fonction Fb2 est un pré-traitement d'uniformisation de caractéristiques temporelles des séries temporelles x₁ à x_{E}, plus précisément, du pas de temps. La fonction Fb2 effectue typiquement des interpolations linéaires dans les séries temporelles x₁ à x_{E}, avec un même pas de temps PL, afin d'obtenir un ensemble de séries temporelles uniformément espacées. Le pas de temps PL est un paramètre qui est choisi par l'utilisateur. Le pas de temps PL choisi sera généralement celui qui permet de conserver les informations pertinentes des séries temporelles initiales. L'interpolation de type linéaire présente l'avantage d'un calcul relativement simple et permet d'éviter des erreurs d'interpolation trop importantes dans le cas d'un grand nombre de mesures. Cependant, on notera qu'un autre type d'interpolation pourra être utilisé dans d'autres modes de réalisation du procédé selon l'invention.

A l'issue du traitement effectué par la fonction Fb2, toutes les séries temporelles x₁ à x_{E} sont uniformément espacées avec le même pas de temps PL. Dans la suite du traitement et ce jusqu'à l'exécution de la fonction Fb5, il est considéré que la première mesure L0 de chaque série temporelle correspond au temps t₀= « 0 » et que l'intervalle de temps entre deux mesures successives est d'une unité de temps, ce qui donne : t₀ = 0, t₁ = 1, t₂ = 2, ..., etc.

La fonction Fb3 concerne la loi de calcul de distance utilisée en tant que mesure de similarité entre les séries temporelles uniformément espacées, en vue de déterminer les K plus proches séries temporelles voisines pour chacune des séries temporelles de l'ensemble des séries temporelles à anonymiser. Deux distances, basées sur la transformée de Fourier, ont été identifiées par l'entité inventive comme donnant de bons résultats pour une mesure de similarité entre deux séries temporelles n'ayant pas le même nombre de mesures.

La transformée de Fourier permet une représentation dans le domaine des fréquences d'un signal variant dans le temps. La transformée de Fourier discrète X(p) d'une série temporelle x(t), uniformément espacée, est donnée par l'égalité Eq1 montrée dans le bloc Fb31 à la Fig.7. La transformée de Fourier inverse est donnée par l'égalité Eq2 montrée dans le bloc Fb31 à la Fig.7.

La première distance utilisable, désignée d_{DFT}(xᵢ, xⱼ) entre deux séries temporelles considérées xᵢ(t) et xⱼ(t) est calculée avec l'égalité Eq3 montrée dans le bloc Fb32 à la Fig.7, à partir des transformées de Fourier Xᵢ(p) et Xⱼ(p) de ces deux séries temporelles xᵢ(t) et xⱼ(t).

Pour les séries temporelles xᵢ(t) et xⱼ(t) comportant le même nombre de mesures, nᵢ = nⱼ, cette distance d_{DFT}(xᵢ, xⱼ) correspond à la distance euclidienne dans le domaine temporel. Cependant, si les séries temporelles n'ont pas le même nombre de mesures, une interpolation linéaire des coefficients de Fourier d'une série temporelle est effectuée aux fréquences des coefficients de Fourier de l'autre série temporelle. La méthode est locale. La série temporelle concernée conserve ses coefficients de Fourier intacts et l'interpolation est effectuée sur l'autre série temporelle.

La deuxième distance utilisable, désignée dc(xᵢ, xⱼ) entre deux séries temporelles considérées xᵢ(t) et xⱼ(t) est calculée avec l'égalité Eq4 montrée dans le bloc Fb33 à la Fig.7, à partir des cepstres Cᵢ et Cⱼ de ces deux séries temporelles xᵢ(t) et xⱼ(t). Le cepstre C d'une série temporelle x est une transformation de la série temporelle x de son domaine temporel vers un autre domaine temporel analogue. Le cepstre C de la série temporelle x est défini comme la transformée de Fourier IFT inverse du logarithme In de la transformée de Fourier FT de la série temporelle x. Le cepstre C est calculé avec l'égalité Eq5 montrée dans le bloc Fb33 à la Fig.7.

Pour les séries temporelles xᵢ(t) et xⱼ(t) ne comportant pas le même nombre de mesures, des zéros sont ajoutés à la fin du cepstre, Cᵢ(p) ou Cⱼ(p), ayant le moins de mesures. Le nombre de zéros ajoutés est égal à : max(nᵢ, nⱼ) - min(nᵢ, nⱼ), les fonctions max et min donnant le nombre de mesures de la série temporelle la plus longue et le nombre de mesures de la série temporelle la plus courte, respectivement.

La distance d_{DFT}, contrairement à la distance cepstrale dc, prend en compte les différences d'échelle d'amplitude et de décalage des valeurs. Deux séries temporelles ayant le même schéma à des amplitudes différentes seront considérées comme similaires avec la distance cepstrale.

Le choix de la distance utilisée, d_{DFT} ou dc, dépendra de l'application et sera fait afin d'être le plus proche possible de la notion de similarité dans l'application concernée. Ce choix est représenté à la Fig.7 par le bloc conditionnel Fb30. On notera que certaines applications pourront utiliser les deux distances, d_{DFT} et dc, pour leur loi de calcul de distance.

La fonction Fb4 concerne la construction d'un modèle local pour chaque série temporelle de l'ensemble des séries temporelles à anonymiser. La méthode k-NN (de « k-nearest neighbors » en anglais) est utilisée pour identifier les K plus proches séries temporelles voisines pour chacune des séries temporelles. A chaque série temporelle est alors associé un modèle local formée de ses K plus proches séries temporelles voisines. La distance, d_{DFT} ou dc, choisie par l'utilisateur est celle qui est utilisée pour cette identification des K plus proches séries temporelles voisines.

Le choix du paramètre K est fait par l'utilisateur et conditionne à la fois le risque de réidentification et la conservation de l'information par les avatars. En effet, avec l'accroissement de la valeur du paramètre K, chaque modèle local est basé sur des plus proches séries temporelles voisines qui sont de moins en moins similaires à la série temporelle d'intérêt. L'avatar obtenu pour une série temporelle est plus distinct de celle-ci, ce qui réduit le risque de réidentification. Par contre, la conservation de l'information par l'avatar est moindre.

La fonction Fb5 concerne le processus de génération des avatars des séries temporelles, à partir des modèles locaux formés des K plus proches séries temporelles voisines. Pour chaque série temporelle, les K plus proches séries temporelles voisines identifiées par la fonction précédente Fb4 sont utilisées pour créer un avatar par le calcul d'une moyenne pondérée aléatoire de leurs transformées de Fourier. La série temporelle d'intérêt n'est à aucun moment utilisée directement dans le processus de génération de son avatar.

L'avatar dans le domaine fréquentiel, désigné Xi^{A}(p), de la série temporelle xᵢ est calculé à l'aide de l'égalité Eq6 montrée à la Fig.7, à partir des transformées de Fourier X_{k(k=1, ..., K)} des K plus proches séries temporelles voisines, désignées xk(k=1, ..., K), de la série temporelle xᵢ, les transformées de Fourier X_{k(k=1, ..., K)} étant interpolées aux fréquences des coefficients de Fourier de xᵢ.

Dans l'égalité Eq6, la pondération aléatoire est introduite par des coefficients aₚₖ qui sont donnés par l'égalité Eq7 montrée à la Fig.7. Le coefficient aₚₖ est le poids aléatoire attribué à la k-ième série temporelle voisine la plus proche, désignée xₖ, de la série temporelle xᵢ.

Dans l'égalité Eq7, dₖ est la distance entre xᵢ et sa plus proche série temporelle voisine xₖ, wₖ est un poids aléatoire compris entre zéro et un, suivant une distribution uniforme, et Cₚₖ est une contribution qui correspond à la valeur à l'indice k du vecteur mélangé aléatoirement (1/2¹, ..., 1/2^{K}).

La contribution Cₚₖ peut être globale ou locale et est laissée au choix de l'utilisateur. Dans les deux cas, la somme de toutes les contributions Cₚₖ pour un indice fixe p est, dans cet exemple, donnée par l'égalité Eq8 montrée à la Fig.7.

La contribution Cₚₖ est globale lorsque la même valeur est attribuée à tous les coefficients de Fourier d'une plus proche série temporelle voisine. Pour une plus proche série temporelle voisine, une contribution globale donne la même importance à tous les coefficients de Fourier de celle-ci et permet donc une meilleure conservation de l'information.

La contribution Cₚₖ est locale lorsque les valeurs attribuées aux coefficients de Fourier d'une plus proche série temporelle voisine varie d'un coefficient de Fourier à l'autre. Pour une plus proche série temporelle voisine, une contribution locale donne beaucoup d'importance à certains des coefficients de Fourier de celle-ci et peu d'importance à d'autres. Cela permet une meilleure protection contre une réidentification.

Une fois obtenu l'avatar Xi^{A}(p) dans le domaine fréquentiel, une transformée de Fourier inverse est appliquée pour obtenir une première version d'avatar xᵢ^{A}(t) dans le domaine temporel. Cette première version d'avatar obtenue xᵢ^{A}(t) a les mêmes caractéristiques temporelles que la série temporelle à partir de laquelle il a été créé, avec un nombre de mesures et le temps de la première mesure qui restent identiques.

La fonction Fb6 concerne un processus d'anonymisation supplémentaire qui traite des caractéristiques temporelles de la première version d'avatar obtenue xᵢ^{A}(t), à savoir, le temps de la première mesure, le nombre de mesures et le pas de temps, pour produire un avatar délivrable xᵢ^{A}(t)_{F} qui est celui fourni par le procédé d'anonymisation de séries temporelles selon l'invention pour la série temporelle xᵢ(t).

Dans cette fonction Fb6, la première version d'avatar xᵢ^{A}(t) est considérée tout d'abord comme ayant les mêmes temps t₀^{A}, t₁^{A}, ..., tₙᵢ^{A} que ceux t₀, t₁, ..., tₙᵢ de la série temporelle à partir de laquelle il a été créé, soit : t₀^{A}=t₀, t₁^{A}=t₁, ..., tₙᵢ^{A}=tₙᵢ.

Le processus d'anonymisation supplémentaire de la fonction Fb6 fait appel à une loi de sélection, représenté par l'égalité Eq9 montrée à la Fig.7, qui délivre des probabilités pk. A chaque série temporelle voisine la plus proche d'indice k de la série temporelle considérée d'indice i, il est attribué une probabilité pk calculée avec l'égalité Eq9. Dans l'égalité Eq9, la distance dₖ (dₕ) et le poids aléatoire wₖ (wₕ) sont tels que définis plus haut en relation à l'égalité Eq7.

Concernant le temps de la première mesure qui est identifiant, le processus d'anonymisation supplémentaire prévoit le traitement A) ci-après. Pour chaque première version d'avatar xᵢ^{A}(t), il est créé une phase à partir des temps de première mesure des séries temporelles voisines les plus proches. Une série temporelle voisine la plus proche avec la probabilité définie par (pk)k=1, ..., K, est sélectionnée, de manière aléatoire. En considérant que c'est la série temporelle voisine la plus proche d'indice j qui est sélectionnée, la phase définie par l'égalité Eq10 montrée à la Fig.7 est appliquée à la première version d'avatar xᵢ^{A}(t). Ce traitement permet de fixer la phase dans l'avatar délivrable xᵢ^{A}(t)_{F}.

Concernant le nombre n de mesures, qui est lié à la durée du séjour et qui est identifiant, le processus d'anonymisation supplémentaire prévoit le traitement B) ci-après. Comme pour le traitement de la phase indiqué ci-dessus, une série temporelle voisine la plus proche avec la probabilité (pk)k=1, ..., K, est sélectionnée, de manière aléatoire. En considérant que c'est la série temporelle voisine la plus proche d'indice j qui est sélectionnée, le nombre de mesures conservées pour la première version d'avatar xᵢ^{A}(t) est donné par la fonction min(nᵢ, nⱼ). Ainsi, si nⱼ < nᵢ, les nᵢ-nⱼ dernières mesures ne sont pas conservées, et si nⱼ >= nᵢ, toutes les mesures sont conservées. Ce traitement permet de fixer le nombre n de mesures dans l'avatar délivrable xᵢ^{A}(t)_{F}.

Concernant le pas de temps PL (cf. Fig.3), le processus d'anonymisation supplémentaire prévoit le traitement C) ci-après. Si le pas de temps PL des séries temporelles a fait l'objet d'un pré-traitement d'uniformisation par la fonction Fb2, un nouveau pas de temps PL^{A} est sélectionné de manière aléatoire pour la première version d'avatar xᵢ^{A}(t). Le pas de temps PL^{A} est pris égal à celui de la série temporelle voisine la plus proche avec la probabilité (pk)k=1, ..., K. Une interpolation linéaire des mesures de la première version d'avatar xᵢ^{A}(t) est ensuite réalisée avec ce nouveau pas de temps PL^{A}. Ce traitement permet de fixer le pas de temps dans l'avatar délivrable xᵢ^{A}(t)_{F}.

On notera que le procédé selon l'invention garantit une préservation du type de données. Ainsi, par exemple, dans le cas de séries temporelles à valeur entière, lorsque l'utilisation du procédé selon l'invention conduit à des valeurs non entières pour les avatars, chaque valeur d'avatar sera arrondie à l'entier le plus proche.

On notera également que le procédé selon l'invention est applicable dans le cas des séries temporelles multivariées, dans lesquelles plusieurs variables évoluent sur une même période. Dans un tel cas, la distance entre deux séries temporelles multivariées est obtenue en sommant les distances entre chaque variable. Les séries temporelles voisines les plus proches sont donc les séries temporelles les plus similaires en tenant compte de toutes les variables. Une fois identifiées les séries temporelles voisines les plus proches, le calcul des avatars est réalisé séparément pour chacune des variables, comme dans le cas des séries temporelles univariées.

Bien entendu, l'invention ne se limite pas aux exemples de réalisation qui ont été décrits ici à titre illustratifs. L'homme du métier, selon les applications de l'invention, pourra apporter différentes modifications et variantes entrant dans le champ de protection de l'invention.

## Revendications

1. Procédé de traitement d'anonymisation de données sensibles mis en œuvre par ordinateur, lesdites données sensibles étant des enregistrements chronologiques formant un ensemble de séries temporelles (x₁ à x_{E}) et représentant chacun une évolution dans le temps d'une même variable (TS), ledit procédé délivrant des enregistrements chronologiques anonymisés formés d'un ensemble de séries temporelles synthétiques, dites « avatars », en tant que version anonymisée dudit ensemble de séries temporelles (x₁ à x_{E}), ledit procédé comprenant une identification (Fb3, Fb4), pour chaque dite série temporelle considérée (xᵢ), d'un nombre prédéterminé K de plus proches séries temporelles voisines dans ledit ensemble de séries temporelles (x₁ à x_{E}) à l'aide d'une loi de calcul de distance prédéterminée (Eq3) fournissant des distances (d_{DFT}) dans le domaine fréquentiel entre ladite série temporelle considérée (xᵢ) et d'autres séries temporelles (xⱼ) dudit ensemble de séries temporelles (x₁ à x_{E}), et une génération (Fb5), pour chaque dite série temporelle considérée (xᵢ), d'une première version de série temporelle synthétique (xᵢ^{A}(t)) à partir d'une combinaison (Eq6) dans le domaine fréquentiel desdites K plus proches séries temporelles voisines identifiées, le procédé comprenant un processus d'anonymisation supplémentaire (Fb6) appliqué à l'ensemble généré de premières versions de séries temporelles synthétiques (xᵢ^{A}(t)) et délivrant ledit ensemble de séries temporelles synthétiques (xᵢ^{A}(t)_{F}), ledit processus d'anonymisation supplémentaire visant des caractéristiques temporelles de phase (t₀, Eq10), de nombre de mesures (n, nᵢ, nⱼ) et/ou de pas de mesure (PL, PL^{A}) desdites premières versions de séries temporelles synthétiques, et ledit processus d'anonymisation supplémentaire réalisant sur une dite première version de série temporelle synthétique considérée (xᵢ^{A}(t)) une modification d'au moins une dite caractéristique temporelle à partir d'au moins une caractéristique temporelle de même type d'une desdites K plus proches séries temporelles voisines identifiées qui est sélectionnée à l'aide d'une loi de sélection prédéterminée (Eq9), **caractérisé en ce que** dans ladite génération (Fb5), pour chaque dite série temporelle considérée (xᵢ), d'une première version de série temporelle synthétique (xᵢ^{A}(t)), ladite première version de série temporelle synthétique est générée en calculant, pour chaque enregistrement chronologique de ladite série temporelle considérée (xᵢ), la moyenne pondérée aléatoire des transformées de Fourier desdites K plus proches séries temporelles voisines identifiées

2. Procédé selon la revendication 1, **caractérisé en ce que** dans ladite génération (Fb5) desdites premières versions de séries temporelles synthétiques, la combinaison desdites K plus proches séries temporelles voisines identifiées fait appel à une somme pondérée (Eq6) de celles-ci dans le domaine fréquentiel comprenant des coefficients de poids aléatoire (aₚₖ) attribués respectivement auxdites K plus proches séries temporelles voisines identifiées.

3. Procédé selon la revendication 2, **caractérisé en ce que** lesdits coefficients de poids aléatoire (aₚₖ) sont calculés à partir desdites distances (dₖ(xᵢ, xₖ)), d'un poids aléatoire (wₖ) et d'une contribution (Cₚₖ) déduite à partir d'un vecteur mélangé aléatoirement (1/2¹, ..., 1/2^{K}).

4. Procédé selon l'une quelconque des revendications 1 à 3, **caractérisé en ce que** ladite loi de sélection prédéterminée (Eq9) prend en compte lesdites distances (dₖ, dₕ) et un poids aléatoire (wₖ, wₕ).

5. Système de traitement d'anonymisation par ordinateur de données sensibles, lesdites données sensibles étant des enregistrements chronologiques formant un ensemble de séries temporelles (x₁ à x_{E}) et représentant chacun une évolution dans le temps d'une même variable (TS), ledit système délivrant des enregistrements chronologiques anonymisés formés d'un ensemble de séries temporelles synthétiques, dites « avatars », en tant que version anonymisée dudit ensemble de séries temporelles (x₁ à x_{E}), ledit système comprenant un module d'identification (Fb3, Fb4) identifiant, pour chaque dite série temporelle considérée (xᵢ), un nombre prédéterminé K de plus proches séries temporelles voisines dans ledit ensemble de séries temporelles (x₁ à x_{E}) à l'aide d'une loi de calcul de distance prédéterminée (Eq3) fournissant des distances (d_{DFT}) dans le domaine fréquentiel entre ladite série temporelle considérée (xᵢ) et d'autres séries temporelles (xⱼ) dudit ensemble de séries temporelles (x₁ à x_{E}), et un module de génération (Fb5) générant, pour chaque dite série temporelle considérée (xᵢ), une première version de série temporelle synthétique (xᵢ^{A}(t)) à partir d'une combinaison (Eq6) dans le domaine fréquentiel desdites K plus proches séries temporelles voisines identifiées, le système comprenant un module de traitement d'anonymisation supplémentaire (Fb6) traitant ledit ensemble généré de premières versions de séries temporelles synthétiques (xᵢ^{A}(t)) et délivrant ledit ensemble de séries temporelles synthétiques (xᵢ^{A}(t)_{F}), ledit module de traitement d'anonymisation supplémentaire (Fb6) traitant des caractéristiques temporelles de phase (t₀, Eq6), de nombre de mesures (n, ni, nⱼ) et/ou de pas de mesure (PL, PL^{A}) desdites premières versions de séries temporelles synthétiques, et ledit module de traitement d'anonymisation supplémentaire (Fb6) réalisant sur une dite première version de série temporelle synthétique considérée (xᵢ^{A}(t)) une modification d'au moins une dite caractéristique temporelle à partir d'au moins une caractéristique temporelle de même type d'une desdites K plus proches séries temporelles voisines identifiées qui est sélectionnée à l'aide d'une loi de sélection prédéterminée (Eq9), **caractérisé en ce que** le module de génération (Fb5) génère, pour chaque dite série temporelle considérée (xᵢ), ladite première version de série temporelle synthétique (xᵢ^{A}(t)) en calculant, pour chaque enregistrement chronologique de ladite série temporelle considérée (xᵢ), la moyenne pondérée aléatoire des transformées de Fourier desdites K plus proches séries temporelles voisines identifiées

6. Système informatique (DSL1 à DSLp) de traitement d'anonymisation par ordinateur de données sensibles, ledit système comportant un dispositif de stockage de données stockant des instructions de programme (MAD1 à MADp, FB) pour la mise en œuvre du procédé selon l'une quelconque des revendications 1 à 4.

7. Système de traitement d'anonymisation par ordinateur et de partage de données sensibles (DST), ledit système comprenant au moins un système informatique (DSL1 à DSLp) selon la revendication 6 et un serveur informatique distant (SID) reliés à travers un réseau de communication de données (IP), ledit serveur informatique distant (SID) hébergeant des fonctions (SWD, FS1, DB) de téléversement et stockage d'enregistrements chronologiques anonymisés (DSTA) fournis par ledit au moins un système informatique (DSL1 à DSLp) et des fonctions (SWD, FS2, URL, SFTP, DB, API) de gestion de destinataires et de partage desdits enregistrements chronologiques anonymisés (DSTA).

8. Produit programme d'ordinateur comportant un support dans lequel sont enregistrées des instructions de programme (MAD1 à MADp, FB) lisibles par un processeur pour la mise en œuvre du procédé selon l'une quelconque des revendications 1 à 4.

## Patentansprüche

1. Verfahren zum Verarbeiten der Anonymisierung von sensiblen Daten, das durch einen Computer implementiert wird, wobei die sensiblen Daten chronologische Einträge sind, die eine Menge von Zeitreihen (x₁ bis x_{E}) ausbilden, und jede eine zeitliche Entwicklung einer gleichen Variablen (TS) abbildet, wobei das Verfahren anonymisierte chronologische Einträge liefert, die aus einer Menge von synthetischen Zeitreihen, den sogenannten "Avataren", als anonymisierte Version der Menge von Zeitreihen (x₁ bis x_{E}), ausgebildet werden, das Verfahren umfassend eine Identifizierung (Fb3, Fb4), für jede sogenannte betrachtete Zeitreihe (xᵢ), einer zuvor bestimmten Anzahl K von nächstgelegenen benachbarten Zeitreihen in der Menge von Zeitreihen (x₁ bis x_{E}) mittels eines zuvor bestimmten Abstandsberechnungsgesetzes (Eq3), das Abstände (d_{DFT}) in dem Frequenzbereich zwischen der betrachteten Zeitreihe (xᵢ) und anderen Zeitreihen (xⱼ) der Menge von Zeitreihen (x₁ bis x_{E}) bereitstellt, und eine Generierung (Fb5), für jede sogenannte betrachtete Zeitreihe (xᵢ), einer ersten Version einer synthetischen Zeitreihe (xᵢ^{A}(t)) anhand einer Kombination (Eq6) in dem Frequenzbereich der K identifizierten nächstgelegenen benachbarten Zeitreihen, das Verfahren umfassend einen zusätzlichen Anonymisierungsprozess (Fb6), der auf die generierte Menge von ersten Versionen von synthetischen Zeitreihen (xᵢ^{A}(t)) angewendet wird, und der die Menge von synthetischen Zeitreihen (xᵢ^{A}(t)_{F}) liefert, wobei der zusätzliche Anonymisierungsprozess auf zeitliche Phasenmerkmale (t₀, Eq10), die Anzahl von Messungen (n, nᵢ, nⱼ) und/oder die Messschritte (PL, PL^{A}) der ersten Versionen von synthetischen Zeitreihen abzielt, und wobei der zusätzliche Anonymisierungsprozess auf einer sogenannten ersten Version einer betrachteten synthetischen Zeitreihe (xᵢ^{A}(t)) eine Modifizierung von mindestens einem genannten Zeitmerkmal anhand von mindestens einem Zeitmerkmal des gleichen Typs einer der K identifizierten nächstgelegenen benachbarten Zeitreihen, die mittels eines zuvor bestimmten Auswahlgesetzes (Eq9) ausgewählt werden, umsetzt, **dadurch gekennzeichnet, dass** bei der Generierung (Fb5), für jede der betrachteten Zeitreihe (xᵢ) einer ersten Version einer synthetischen Zeitreihe (xᵢ^{A}(t)), die erste Version einer synthetischen Zeitreihe generiert wird, durch Berechnen, für jeden chronologischen Eintrag der betrachteten Zeitreihe (xᵢ), des zufällig gewichteten Durchschnitts der Fourier-Transformationen der K identifizierten nächstgelegenen benachbarten Zeitreihen

2. Verfahren nach Anspruch 1, **dadurch gekennzeichnet, dass** bei der Generierung (Fb5) der ersten Versionen von synthetischen Zeitreihen, die Kombination der K identifizierten nächstgelegenen benachbarten Zeitreihen eine gewichtete Summe (Eq6) davon in dem Frequenzbereich hinzuzieht, umfassend zufällige Gewichtungskoeffizienten (aₚₖ), die jeweils K identifizierten nächstgelegenen benachbarten Zeitreihen zugewiesen sind.

3. Verfahren nach Anspruch 2, **dadurch gekennzeichnet, dass** die zufälligen Gewichtungskoeffizienten (aₚₖ) anhand der genannten Abstände (dₖ(xᵢ, xₖ)), einer zufälligen Gewichtung (wₖ) und eines Beitrags (Cₚₖ), abgeleitet anhand eines zufällig gemischten Vektors (1/2¹, ..., 1/2^{K}), berechnet werden.

4. Verfahren nach einem der Ansprüche 1 bis 3,
**dadurch gekennzeichnet, dass** das zuvor bestimmte Auswahlgesetz (Eq9) die Abstände (dₖ, dₕ) und eine zufällige Gewichtung (wₖ, wₕ) berücksichtigt.

5. System für die computergestützte Anonymisierung von sensiblen Daten, wobei die sensiblen Daten chronologische Einträge sind, die eine Menge von Zeitreihen (x₁ bis x_{E}) ausbilden, und jede eine zeitliche Entwicklung einer gleichen Variablen (TS) abbildet, wobei das System anonymisierte chronologische Einträge liefert, die aus einer Menge von synthetischen Zeitreihen, den sogenannten "Avataren", als anonymisierte Version der Menge von Zeitreihen (x₁ bis x_{E}), ausgebildet werden, das System umfassend ein Identifizierungsmodul (Fb3, Fb4), das für jede der betrachteten Zeitreihe (xᵢ), eine zuvor bestimmte Anzahl K von nächstgelegenen benachbarten Zeitreihen in der Menge von Zeitreihen (x₁ bis x_{E}) mittels eines zuvor bestimmten Abstandsberechnungsgesetzes (Eq3), das Abstände (d_{DFT}) in dem Frequenzbereich zwischen der betrachteten Zeitreihe (xᵢ) und anderen Zeitreihen (xⱼ) der Menge von Zeitreihen (x₁ bis x_{E}) bereitstellt, identifiziert, und ein Generierungsmodul (Fb5), das für jede sogenannte betrachtete Zeitreihe (xᵢ) eine erste Version einer synthetischen Zeitreihe (xᵢ^{A}(t)) anhand einer Kombination (Eq6) in dem Frequenzbereich der K identifizierten nächstgelegenen benachbarten Zeitreihen generiert, das System umfassend ein zusätzliches Anonymisierungsverarbeitungsmodul (Fb6), das die generierte Menge von ersten Versionen von synthetischen Zeitreihen (xᵢ^{A}(t)) verarbeitet und das die Menge von synthetischen Zeitreihen (xᵢ^{A}(t)_{F}) liefert, wobei das zusätzliche Anonymisierungsverarbeitungsmodul (Fb6) zeitliche Phasenmerkmale (t₀, Eq10), die Anzahl von Messungen (n, nᵢ, nⱼ) und/oder die Messschritte (PL, PL^{A}) der ersten Versionen von synthetischen Zeitreihen verarbeitet, und das zusätzliche Anonymisierungsverarbeitungsmodul (Fb6), auf einer sogenannten ersten Version einer betrachteten synthetischen Zeitreihe (xᵢ^{A}(t)) eine Modifizierung von mindestens einem genannten Zeitmerkmal anhand von mindestens einem Zeitmerkmal des gleichen Typs einer der K identifizierten nächstgelegenen benachbarten Zeitreihen, die mittels eines zuvor bestimmten Auswahlgesetzes (Eq9) ausgewählt werden, umsetzt,
**dadurch gekennzeichnet, dass** das Generierungsmodul (Fb5), für jede der betrachteten Zeitreihe (xᵢ), die erste Version einer synthetischen Zeitreihe (xᵢ^{A}(t)) generiert, durch Berechnen, für jeden chronologischen Eintrag der betrachteten Zeitreihe (xᵢ), des zufällig gewichteten Durchschnitts der Fourier-Transformationen der K identifizierten nächstgelegenen benachbarten Zeitreihen

6. Computersystem (DSL1 bis DSLp) für die Verarbeitung einer computergestützten Anonymisierung von sensiblen Daten, wobei das System eine Datenspeichervorrichtung vorweist, auf der Programmanweisungen (MAD1 bis MADp, FB) für die Implementierung des Verfahrens nach einem der Ansprüche 1 bis 4 gespeichert sind.

7. System für die Verarbeitung einer computergestützten Anonymisierung und für die Teilung von sensiblen Daten (DST), das System umfassend mindestens ein Computersystem (DSL1 bis DSLp) nach Anspruch 6 und einen entfernten Computerserver (SID), der über ein Datenkommunikationsnetzwerk (IP) verbunden ist, wobei der entfernte Computerserver (SID) Funktionen (SWD, FS1, DB) zum Hochladen und Speichern von anonymisierten chronologischen Einträgen (DSTA) hostet, die durch das mindestens eine Computersystem (DSL1 bis DSLp) bereitgestellt werden, und Funktionen (SWD, FS2, URL, SFTP, DB, API) zum Verwalten von Empfängern und Teilen der anonymisierten chronologischen Einträge (DSTA).

8. Computerprogrammprodukt, das einen Träger vorweist, auf dem Programmanweisungen (MAD1 bis MADp, FB) eingetragen sind, die durch einen Prozessor für die Implementierung des Verfahrens nach einem der Ansprüche 1 bis 4 lesbar sind.

## Claims

1. Computer-implemented processing method for anonymizing sensitive data, said sensitive data being logs which form a set of time series (x₁ to x_{E}) and each represent a change over time of a single variable (TS), said method outputting anonymized logs formed from a set of synthetic time series, referred to as "avatars", as an anonymized version of said set of time series (x₁ to x_{E}), said method comprising a step of identifying (Fb3, Fb4), for each said considered time series (xᵢ), a predetermined number K of nearest neighbor time series in said set of time series (x₁ to x_{E}) by means of a predetermined distance calculation law (Eq3) providing distances (d_{DFT}), in the frequency domain, between said considered time series (xᵢ) and other time series (xⱼ) from said set of time series (x₁ to x_{E}), and a step of generating (Fb5), for each said considered time series (xᵢ), a first synthetic time series version (xᵢ^{A}(t)) on the basis of a combination (Eq6), in the frequency domain, of said identified K nearest neighbor time series, the method comprising a process (Fb6) for further anonymization, which process is applied to the generated set of first synthetic time series versions (xᵢ^{A}(t)) and outputs said set of synthetic time series (xᵢ^{A}(t)_{F}), said further anonymization process targeting time characteristics of phase (t₀, Eq10), number of measurements (n, nᵢ, nⱼ) and/or measurement increment (PL, PL^{A}) relating to said first synthetic time series versions, and said further anonymization process modifying, for one said considered first synthetic time series version (xᵢ^{A}(t)), at least one said time characteristic on the basis of at least one time characteristic of the same type relating to one of said identified K nearest neighbor time series which is selected by means of a predetermined selection law (Eq9), **characterized in that** in said step of generating (Fb5), for each said considered time series (xᵢ), a first synthetic time series version (xᵢ^{A}(t)), said first synthetic time series version is generated by calculating, for each log from said considered time series (xᵢ), the random weighted arithmetic mean of the Fourier transforms of said identified K nearest neighbor time series.

2. Method according to claim 1, **characterized in that** in said step of generating (Fb5) said first synthetic time series versions, the combination of said identified K nearest neighbor time series involves a weighted sum (Eq6) thereof, in the frequency domain, comprising coefficients (aₚₖ) of random weight which are individually assigned to said identified K nearest neighbor time series.

3. Method according to claim 2, **characterized in that** said random weight coefficients (aₚₖ) are calculated on the basis of said distances (dₖ(xᵢ, xₖ)), a random weight (wₖ) and an input (Cₚₖ) which is deduced on the basis of a randomly mixed vector (1/2¹, ..., 1/2^{K}).

4. Method according to any of claims 1 to 3, **characterized in that** said predetermined selection law (Eq9) takes into account said distances (dₖ, dₕ) and a random weight (wₖ, wₕ).

5. Processing system for computer-anonymizing sensitive data, said sensitive data being logs which form a set of time series (x₁ to x_{E}) and each represent a change over time of a single variable (TS), said system outputting anonymized logs formed from a set of synthetic time series, referred to as "avatars", as an anonymized version of said set of time series (x₁ to x_{E}), said system comprising an identification module (Fb3, Fb4) identifying, for each said considered time series (xᵢ), a predetermined number K of nearest neighbor time series in said set of time series (x₁ to x_{E}) by means of a predetermined distance calculation law (Eq3) providing distances (d_{DFT}), in the frequency domain, between said considered time series (xᵢ) and other time series (xⱼ) from said set of time series (x₁ to x_{E}), and a generation module (Fb5) generating, for each said considered time series (xᵢ), a first synthetic time series version (xᵢ^{A}(t)) on the basis of a combination (Eq6), in the frequency domain, of said identified K nearest neighbor time series, the system comprising a processing module (Fb6) for further anonymization, which processing module processes said generated set of first synthetic time series versions (xᵢ^{A}(t)) and outputs said set of synthetic time series (xᵢ^{A}(t)_{F}), said further anonymization processing module (Fb6) processing time characteristics of phase (t₀, Eq6), number of measurements (n, nᵢ, nⱼ) and/or measurement increment (PL, PL^{A}) relating to said first synthetic time series versions, and said further anonymization processing module (Fb6) modifying, for one said considered first synthetic time series version (xᵢ^{A}(t)), at least one said time characteristic on the basis of at least one time characteristic of the same type relating to one of said identified K nearest neighbor time series which is selected by means of a predetermined selection law (Eq9), **characterized in that** the generation module (Fb5) generates, for each said considered time series (xᵢ), said first synthetic time series version (xᵢ^{A}(t)) by calculating, for each log from said considered time series (xᵢ), the random weighted arithmetic mean of the Fourier transforms of said identified K nearest neighbor time series.

6. Computer processing system (DSL1 to DSLp) for computer-anonymizing sensitive data, said system having a data storage device storing program instructions (MAD1 to MADp, FB) for implementing the method according to any of claims 1 to 4.

7. Processing system for computer-anonymizing and sharing sensitive data (DST), said system comprising at least one computer system (DSL1 to DSLp) according to claim 6 and a remote computer server (SID) which are connected via a data communication network (IP), said remote computer server (SID) hosting functions (SWD, FS1, DB) for uploading and storing anonymized logs (DSTA) provided by said at least one computer system (DSL1 to DSLp) and functions (SWD, FS2, URL, SFTP, DB, API) for managing recipients and sharing said anonymized logs (DSTA).

8. Computer program product having a medium in which program instructions (MAD1 to MADp, FB) are recorded that are readable by a processor for implementing the method according to any of claims 1 to 4.
